(19) Europäisches Patentamt / European Patent Office / Office européen des brevets

(11) **EP 4 604 202 A1**

(12) **EUROPEAN PATENT APPLICATION**
published in accordance with Art. 153(4) EPC

(43) Date of publication:
**20.08.2025 Bulletin 2025/34**

(21) Application number: **23925694.4**

(22) Date of filing: **06.03.2023**

(51) International Patent Classification (IPC):
$H01M\ 4/36^{(2006.01)}$      $H01M\ 4/38^{(2006.01)}$
$H01M\ 4/485^{(2010.01)}$    $H01M\ 4/58^{(2010.01)}$

(52) Cooperative Patent Classification (CPC):
**H01M 4/36; H01M 4/38; H01M 4/485; H01M 4/58; Y02E 60/10**

(86) International application number:
**PCT/CN2023/079821**

(87) International publication number:
**WO 2024/182969 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
• **GUO, Xiaoxin**
 **Ningde, Fujian 352100 (CN)**
• **WANG, Jiazheng**
 **Ningde, Fujian 352100 (CN)**
• **LV, Zijian**
 **Ningde, Fujian 352100 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **SILICON-BASED NEGATIVE ELECTRODE ACTIVE MATERIAL AND PREPARATION METHOD THEREFOR, SECONDARY BATTERY, AND ELECTRICAL DEVICE**

(57)     A silicon-based negative electrode active material, comprising Si and $MSiO_3$, where M comprises one or more alkaline earth metal elements, has, in an XRD diffraction pattern of the silicon-based negative electrode active material, a first diffraction peak at a diffraction angle 2θ between 26° and 26.8° having a half peak width of $\beta_A$, and a second diffraction peak at a diffraction angle 2θ between 31° and 32° having a half peak width of $\beta_B$, where in the silicon-based negative electrode active material, it has $1.5 \le \beta_A / \beta_B \le 5.0$.

FIG. 1

EP 4 604 202 A1

## Description

TECHNICAL FIELD

The present application relates to the technical field of batteries, and in particular, to a silicon-based negative electrode active material, a preparation method thereof, a secondary battery, and an electrical device.

BACKGROUND

Recently, as a secondary battery is applied more and more widely, it is widely used in an energy storage power system, such as a hydraulic, thermal, wind, or solar power plant, etc., and the fields of a power tool, an electric bicycle, an electric motorcycle, an electric vehicle, military equipment, aerospace or the like.

For the secondary battery, a silicon-based negative electrode active material is considered as a promising material. The silicon-based negative electrode active material requires improved initial Coulombic efficiency and cycle performance due to rapid development of the secondary battery.

SUMMARY

In view of the above problem, the present application provides a novel silicon-based negative electrode active material and a preparation method thereof, a secondary battery, and an electrical device, which are described below.

In a first aspect, the present application provides a silicon-based negative electrode active material, comprising Si and $MSiO_3$, where M comprises one or more alkaline earth metal elements, having, in an XRD diffraction pattern of the silicon-based negative electrode active material, a first diffraction peak at a diffraction angle 2θ between 28° and 26.8° having a half peak width of $\beta_A$, and a second diffraction peak at a diffraction angle 2θ between 31° and 32° having a half peak width of $\beta_B$, where in the silicon-based negative electrode active material, it has $1.5 \leq \beta_A / \beta_B \leq 5.0$.

The negative electrode active material based on the above scheme achieves better initial Coulombic efficiency and cycle life. The above performance improvement, although its mechanism is not known, is possibly related to the sizes and distributions of the Si crystal grain and alkaline earth metal silicate-containing crystal grain in the silicon-based negative electrode active material. When the ratio of the half peak width $\beta_A$ to $\beta_B$ of the XRD diffraction peak is 1-5: 1, the Si crystal grain and alkaline earth metal-containing silicate crystal grain have improved size distributions and positional distributions in the silicon-based negative electrode active material, and such a microstructure helps to alleviate volume expansion of the silicon-based negative electrode active material during cycling, thereby improving the electrochemical performance thereof. When the ratio of $\beta_A$ to $\beta_B$ is too large, the initial Coulombic efficiency of the negative electrode active material is too low, and when the ratio of $\beta_A$ to $\beta_B$ is too small, the cycle performance of the negative electrode active material is too low.

In some embodiments, the ratio of $\beta_A$ to $\beta_B$ indicates $2.0 \leq \beta_A / \beta_B \leq 5.0$, optionally $2.5 \leq \beta_A / \beta_B \leq 4.0$. Based on this scheme, the silicon-based negative electrode active material exhibits further improved cycle life.

In some embodiments, it is $1° \leq \beta_A \leq 3°$, optionally $1° \leq \beta_A \leq 2°$. Based on this scheme, the silicon-based negative electrode active material exhibits further improved cycle life.

In some embodiments, it is $0.2° \leq \beta_B \leq 1.0°$, optionally $0.3° \leq \beta_B \leq 0.5°$. Based on this scheme, the silicon-based negative electrode active material exhibits further improved cycle life.

In some embodiments, the grain size of the Si is smaller than that of the $MSiO_3$. Based on this scheme, the silicon-based negative electrode active material exhibits further improved cycle life.

In some embodiments, the grain size of the Si is smaller than or equal to 12 nm, and optionally is 2 nm-10 nm, and/or the grain size of the $MSiO_3$ is greater than or equal to 11 nm, and optionally is 12 nm-18 nm. Based on this scheme, the silicon-based negative electrode active material exhibits further improved cycle life.

In the silicon-based negative electrode active material according to any one of claims 1-6, at least a part of a surface of the silicon-oxygen composite has a coating layer; and optionally, the coating layer includes one or more of a carbon material and an alkali metal ion conductor material. Based on this scheme, the silicon-based negative electrode active material exhibits further improved cycle life.

In some embodiments, the silicon-based negative electrode active material has a specific surface area of 4 $m^2/g$ or less, optionally 0.5-1.5 $m^2/g$. Based on this scheme, the silicon-based negative electrode active material exhibits further improved cycle life.

In some embodiments, the silicon-based negative electrode active material has a volume average particle diameter Dv50 of 4-15 $\mu$m, optionally 5-9 $\mu$m. Based on this scheme, the silicon-based negative electrode active material exhibits further improved cycle life.

In some embodiments, the silicon-based negative electrode active material has a particle size distribution ($D_V90$-$D_V10$) / $D_V50$ of 0.5-3.0, optionally 0.8-1.3. Based on this scheme, the silicon-based negative electrode active material exhibits further improved cycle life.

In some embodiments, the content of element Si is 20-80wt%, optionally 30-60wt% in the silicon-based negative electrode active material. Based on this scheme, the silicon-based negative electrode active material exhibits further improved cycle life.

In some embodiments, the total content of the alkaline earth metal elements is 2-14wt%, optionally 2-10wt% in the silicon-based negative electrode active material. Based on this scheme, the silicon-based negative electrode active material exhibits further improved cycle life.

In some embodiments, the silicon-based negative electrode active material has the molar ratio of Si: O of 1: 0.6-1: 1.8, optionally 1: 0.9-1: 1.5.

In some embodiments, M comprises at least one of Mg, Ca, Be, Sr, and Ba. Based on this scheme, the silicon-based negative electrode active material exhibits further improved cycle life.

In a second aspect, the present application provides a method for preparing the above silicon-based negative electrode active material, comprising the steps of:

providing a raw material containing element Si, element O, and element M, M comprising one or more alkaline earth metal elements;

heating the raw material to a first temperature to form a vapor by using a vapor deposition technique, and then cooling the vapor to a second temperature to form a deposit; and

pulverizing the deposit to obtain a pulverized product;

wherein the content of element M is 7% -10% in the raw material;

wherein the raw material is heated to the first temperature at a temperature increase rate of 10°C/min or less;

wherein the first temperature is 1100-1500°C; and

wherein the second temperature is 800-1000°C.

In some embodiments, the raw material includes elemental silicon, silicon dioxide, and an alkaline earth metal source.

In some embodiments, when vapor deposition is performed, the first temperature is 1200-1400°C.

In some embodiments, when vapor deposition is performed, the second temperature is 800-900°C.

In some embodiments, vapor deposition is performed with an absolute pressure of 40 Pa or less.

In some embodiments, the method for preparing the silicon-based negative electrode active material further comprises a step of coating the silicon-based negative electrode active material, optionally, the coating treatment is a carbon material coating treatment, and more optionally, the carbon material coating treatment comprises operations of: placing the silicon-based negative electrode active material in a chamber containing a carbon source gas, heating to 700-1000°C, and maintaining the temperature for 1-6 h.

In a third aspect, the present application provides a secondary battery including an negative electrode including the above-described silicon-based negative electrode active material.

In a fourth aspect, the present application provides an electrical device including the above-described secondary battery.

Advantageous Effects:

One or more embodiments of the present application have one or more of the following:

(1) the silicon-based negative electrode active material has improved initial Coulombic efficiency; and

(2) the silicon-based negative electrode active material has an improved cycle capacity retention rate.

DESCRIPTION OF THE DRAWINGS

FIG. 1 is a schematic diagram of a secondary battery according to an embodiment of the present application.

FIG. 2 is an exploded view of a secondary battery according to an embodiment of the present application.

FIG. 3 is a schematic diagram of a battery module according to an embodiment of the present application.

FIG. 4 is a schematic diagram of a battery pack according to an embodiment of the present application.

FIG. 5 is an exploded view of the battery pack shown in FIG. 4 according to an embodiment of the present application.

FIG. 6 is a schematic diagram of an electrical device in which a secondary battery according to an embodiment of the present application is used as a power source.

Description Of Reference Numerals

1 Battery Pack 2 Upper Box Body 3 Lower Box Body 4 Battery Module 5 Secondary Battery 51 Housing 52 Electrode Assembly 53 Top Cover Assembly

DETAILED DESCRIPTION

Hereinafter, referring to the figures as appropriate, detail description is made to the embodiment specifically disclosing the silicon-based negative electrode active material and preparation method thereof, the positive tab, the negative tab, the secondary battery, the battery module, the battery pack, and the device in the present application. However, unnecessary detailed description may be omitted. For example, detailed description of well-known items and redundant description of substantially the same configuration may be omitted. This is to avoid unnecessarily redundant description in the following to facilitate understanding of those skilled in the art. Additionally, the figures and the following description are provided for a person skilled in the art to fully understand the present application, and are not intended to limit the subject matter described in the claims.

"Range" disclosed herein are defined by a lower limit and an upper limit, and a given range is defined by selecting a lower limit and an upper limit which define boundaries of a particular range. The range defined in such a mode may include or exclude an end value, and may have arbitrary combination, i.e., any lower limit may be combined with any upper limit to form a range. For example, if ranges of 60-120 and 80-110 are listed for a particular parameter, it is understood that ranges of 60-110 and 80-120 are also contemplated. Further, if the smallest range values of 1 and 2 and the largest range values of 3, 4 and 5 are listed, the following ranges are all contemplated: 1-3, 1-4, 1-5, 2-3, 2-4, and 2-5. In the present application, unless otherwise stated, numerical range "a-b" is short for any combinations of real numbers between a and b, where a and b are both real numbers. For example, numerical range "0-5" means that all real numbers within "0-5" are set forth herein, and "0-5" is merely short for these numerical combinations. Further, when a parameter is expressed as an integer $\geq 2$, it is equivalent to disclose that the parameter is, for example, an integer of 2, 3, 4, 5, 6, 7, 8, 9, 10, 11, 12, or the like.

Unless otherwise specified, all embodiments and alternative embodiments of the present application may be combined with each other to form new technical solutions.

Unless otherwise specified, all the steps in the present application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "comprising" and "including" as used herein are open-ended or close-ended. For example, "comprising" and "including" may mean that other components not listed may be further included or comprised, or only the listed components may be included or comprised.

In the application, the term "or" is inclusive, unless specifically stated otherwise. For example, phrase "A or B" means "A, B, or both A and B". More specifically, condition "A or B" is satisfied by either A being true (or present) and B being false (or absent), A being false (or absent) and B being true (or present), or both A and B being true (or present).

Herein, ppm is parts per million. When ppm is used to describe the content of an element, it indicates the mass of the element in the silicon-based negative electrode active material in parts per million based on the mass of the silicon-based negative electrode active material.

The terms "comprising", "including" and "containing" are meant to encompass target objects or steps in an open-ended mode, i.e. without excluding other objects or steps. "Comprising", "including" or "containing" an object means that the object is present in an amount greater than 0, e.g., 1-10%, 10-20%, 20-30%, 30-40%, 40-50%, 50-60%, 60-70%, 70-80%, 80-90%, 90-100%. In a non-specific example, "comprising", "including" or "containing" an object encompasses the case of being composed of the object itself.

[Secondary Battery]

A secondary battery, also known as a rechargeable battery or a storage battery, refers to a battery that can be reused by activating an active material by charging after the battery is discharged.

In general, the secondary battery includes a positive tab, a negative tab, a separator, and an electrolyte. During charging and discharging of the battery cell, intercalation/de-intercalation of active ions (e.g., sodium ions) are enabled at the positive electrode and negative electrode by moving the active ions therebetween. The separator is provided between the positive electrode and the negative electrode to prevent the positive electrode and negative electrode from being short-circuited and to allow active ions to pass through the separator. The electrolyte, which is between the positive tab and the negative tab, mainly functions to conduct active ions.

The secondary battery is, for example, a lithium-ion battery. The lithium ion battery is mainly composed of a positive electrode, a negative electrode, a separator, and an electrolyte. The positive electrode and negative electrode are separated by a separator to prevent short circuit, and the electrolyte soaks the positive electrode and negative electrode to ensure ionic conduction. During charging, $Li^+$ is subjected to de-intercalation from the positive electrode and is subjected to intercalation into the negative electrode by passing through the separator via the electrolyte, so that the positive electrode is in a sodium-deficient state at a high potential and the negative electrode is in a sodium-rich state at a low potential. In contrast to the charging, during discharging, Li + is subjected to de-intercalation from the negative electrode and is subjected to intercalation into the positive electrode material by passing through the separator via the electrolyte, restoring the positive electrode to a sodium-rich state. To maintain charge balance, the same number of electrons are transferred through an external circuit during charging and discharging, and migrated between the positive electrode and negative electrode together with Li+, so that the positive and negative electrodes are subjected to oxidation reaction and reduction reaction, respectively. Lithium ions can be reversibly migrated between the positive electrode and the negative electrode in an electrolyte, and the positive electrode and the negative electrode are both composed of an intercalation-type material that allows reversed intercalation/de-intercalation of lithium ions.

The secondary battery is, for example, a sodium ion battery. The sodium ion battery mainly includes a positive electrode, a negative electrode, a separator, and an electrolyte. The positive electrode and negative electrode are separated by a separator to prevent short circuit, and the electrolyte soaks the positive electrode and negative electrode to ensure ionic conduction. During charging, $Na^+$ is subjected to de-intercalation from the positive electrode and is subjected to intercalation into the negative electrode by passing through the separator via the electrolyte, so that the positive electrode is in a sodium-deficient state at a high potential and the negative electrode is in a sodium-rich state at a low potential. In contrast to the charging, in a discharge process, Na + is subjected to de-intercalation from the negative electrode and is subjected to intercalation into the the positive electrode material by passing through the separator via the electrolyte, restoring the positive electrode to a sodium-rich state. To maintain charge balance, the same number of electrons are transferred through an external circuit during charging and discharging, and migrated between the positive electrode and negative electrode together with Na+, so that the positive and negative electrodes are subjected to oxidation reaction and reduction reaction, respectively. Sodium ions can be reversibly migrated between the positive electrode and the negative electrode in an electrolyte, and the positive electrode and the negative electrode are both composed of an intercalation-type material that allows reversed intercalation/de-intercalation of sodium ions.

[Negative Tab]

The negative tab includes a negative current collector and a negative film layer disposed on at least one surface of the negative current collector, and the negative film layer includes a silicon-based negative electrode active material which is the silicon-based negative electrode active material of the present application.

In a first aspect, the present application provides a silicon-based negative electrode active material, comprising Si and $MSiO_3$, where M comprises one or more alkaline earth metal elements, having, in an XRD diffraction pattern of the silicon-based negative electrode active material, a first diffraction peak at a diffraction angle 2θ between 28° and 26.8° having a half peak width of $\beta_A$, and a second diffraction peak at a diffraction angle 2θ between 31° and 32° having a half peak width of $\beta_B$, where in the silicon-based negative electrode active material, it has $1.5 \leq \beta_A / \beta_B \leq 5.0$.

The silicon-based negative electrode active material based on the above scheme have improved initial Coulombic efficiency and/or cycle life. The above performance improvement, although its mechanism is not known, is possibly related to the crystal grain sizes and distributions of the Si crystal grain and $MSiO_3$ crystal grain in the silicon-based negative electrode active material. The half peak width of the XRD diffraction peak has a negative functional relation with a grain size. The present application finds that when the ratio of $\beta_A$ to $\beta_B$ is 1-5: 1, the Si grain and the $MSiO_3$ grain have improved grain sizes and more uniform positional distributions in the silicon-based negative electrode active material, and such a microstructure helps to alleviate volume expansion of the silicon-based negative electrode active material during cycling, thereby improving the electrochemical performance thereof. When the ratio of $\beta_A$ to $\beta_B$ is 1-5: 1, the Si crystal grain and the $MSiO_3$ crystal grain exhibit a synergistic effect, so that the silicon-based negative electrode active material has relatively good cycle life. When the ratio of $\beta_A$ to $\beta_B$ is less than 2 or more than 4, the sizes of the Si crystal grain and the $MSiO_3$ crystal grain may be significantly different, reflecting that the Si crystal grain and the $MSiO_3$ crystal grain are subjected to non-uniform growth and distribution in the silicon-based negative electrode active material, resulting in poor electrochemical performance of the negative electrode active material.

In some embodiments, the ratio of $\beta_A$ to $\beta_B$ is 2.0-2.2: 1, 2.2-2.4: 1, 2.4-2.6: 1, 2.6-2.8: 1, 2.8-3: 1, 3.0-3.2: 1, 3.2-3.4: 1, 3.4-3.6: 1, 3.6-3.8: 1, 3.8-4: 1, 4.0-4.2: 1, 4.2-4.4: 1, 4.4-4.6: 1, 4.6-4.8: 1, or 4.8-5: 1. Based on this scheme, the silicon-based negative electrode active material exhibits further improved cycle life.

In some embodiments, the ratio of $\beta_A$ to $\beta_B$ indicates $2.0 \leq \beta_A / \beta_B \leq 5.0$, optionally $2.5 \leq \beta_A / \beta_B \leq 4.0$. Based on this scheme, the silicon-based negative electrode active material exhibits further improved cycle life.

In some embodiments, the ratio of $\beta_A$ to $\beta_B$ is 2.0-5.0: 1 (e.g., 2.5-2.6: 1, 2.6-2.8: 1, 2.8-3: 1, 3-3.2: 1, 3.2-3.4: 1, 3.4-3.6: 1, 3.6-3.8: 1, and 3.8-4: 1). Based on this scheme, the silicon-based negative electrode active material exhibits further improved cycle life.

In some embodiments, the ratio of $\beta_A$ to $\beta_B$ is 2.5-4.0: 1 (e.g., 2.5-2.6: 1, 2.6-2.8: 1, 2.8-3: 1, 3-3.2: 1, 3.2-3.4: 1, 3.4-3.6: 1, 3.6-3.8: 1, 3.8-4.0: 1). Based on this scheme, the silicon-based negative electrode active material exhibits further improved cycle life.

In some embodiments, it is $1° \leq \beta_A \leq 3°$, optionally $1° \leq \beta_A \leq 2°$. Based on this scheme, the silicon-based negative electrode active material exhibits further improved cycle life.

In some embodiments, it is $0.2° \leq B_B \leq 1.0°$, optionally $0.3° \leq \beta_B \leq 0.5°$. Based on this scheme, the silicon-based negative electrode active material exhibits further improved cycle life.

In some embodiments, the value of $\beta_A$ is $1.0°$ -$3.0°$ (e.g., $1.0°$ -$1.2°$, $1.2°$ -$1.4°$, $1.4°$ -$1.6°$, $1.6°$ -$1.8°$, $1.8°$ -$2.0°$, $2.0°$ -$2.2°$, $2.2°$ -$2.4°$, $2.4°$ -$2.6°$, $2.6°$ -$2.8°$, $2.8°$ -$3.0°$), optionally $1° \leq \beta_A \leq 2°$ (e.g., $1.0°$ -$1.2°$, $1.2°$ -$1.4°$, $1.4°$ -$1.6°$, $1.6°$ -$1.8°$, or $1.8°$ -$2.0°$). In this scheme, the silicon-based negative electrode active material has further improved cycle life.

In some embodiments, $\beta_B$ has a value of $0.2°$ -$1.0°$ (e.g., $0.2°$ -$0.4°$, $0.4°$ -$0.6°$, $0.6°$ -$0.8°$, or $0.8°$ - $1°$). Optionally, the value enables $0.2° \leq \beta_A \leq 1.0°$, and in this scheme, the silicon-based negative electrode active material has further improved cycle life.

In some embodiments, the grain size of the Si is smaller than that of the $MSiO_3$. Based on this scheme, the silicon-based negative electrode active material exhibits further improved cycle life.

In some embodiments, the grain size of the Si is less than or equal to 12 nm, and optionally is 2 nm-10 nm. Based on this scheme, the silicon-based negative electrode active material exhibits further improved cycle life. The crystal grain size is calculated from the half peak width of the XRD diffraction peak according to the Debye-Scherrer equation, and the half peak width is negatively related to the crystal grain size, where the larger the half peak width is, the smaller the crystal grain size is.

In some embodiments, the grain size of the $MSiO_3$ is greater than or equal to 11 nm, and optionally is 12 nm-18 nm. Based on this scheme, the silicon-based negative electrode active material exhibits further improved cycle life. The crystal grain size is calculated from the half peak width of the XRD diffraction peak according to the Debye-Scherrer equation, and the half peak width is negatively related to the crystal grain size, where the larger the half peak width is, the smaller the crystal grain size is.

In some embodiments, the intensity ratio of the first diffraction peak to the second diffraction peak is 1-5: 1, optionally 2-4: 1. In this scheme, the silicon-based negative electrode active material has improved cycle life.

In some embodiments, at least a part of a surface of the silicon-oxygen composite has a coating layer; and optionally, the coating layer includes one or more of a carbon material and an alkali metal ion conductor material. Based on this scheme, the silicon-based negative electrode active material exhibits further improved cycle life.

In some embodiments, the alkali metal ion conductor coating layer comprises a lithium ion conductor and/or a sodium ion conductor.

In some embodiments, the alkali metal ion conductor has an alkali metal ion conductivity of $0.01 \, \Omega \cdot cm$ or more.

In some embodiments, the lithium ion conductor comprises one or more of: $Li_3Fe_2(PO_4)_3$, $Li_3Zr_2Si_2PO_4$, $LiZr_2(PO_4)_3$, $LiTi_2(PO_4)_3$, and $Li_3PO_4$.

In some embodiments, the sodium ion conductor comprises one or more of $Na-\beta-Al_2O_3$, a NASICON sodium ion conductor, and a sulfide sodium ion conductor.

In some embodiments, at least a part of the surface (e.g., the entire surface) of the silicon-based negative electrode active material is coated with a coating layer. The coating layer can further alleviate the volume expansion effect of the negative electrode active material, improving the cycle life of the material. Also, the coating layer protects the negative electrode active material by suppressing the side reaction of the electrolyte on the surface of the material to protect the surface from being eroded by the electrolyte, and thus, the negative electrode active material has a relatively high capacity property to further improve cycle life of a battery.

In some embodiments, the material of the coating layer may comprise one or more of a polymer, a carbon material, a metal material, and a metal compound. For example, the coating layer comprises one or more of a polymer coating layer, a carbon coating layer, and a metal compound coating layer. Optionally, the polymer may comprises one or more of polyaniline, polyacetylene, polystyrene, polyacrylonitrile, polyvinyl chloride, and polyethylene. Alternatively, the metal compound may comprise one or more of $Ti_5Si_3$, $Al_2O_3$, and $TiO_2$. The coating layer can further alleviate the volume expansion effect of the silicon-based negative electrode active material, improving the cycle life of the material. Also, the coating layer protects the silicon-based negative electrode active material by suppressing the side reaction of the electrolyte on the surface of the material to protect the surface from being eroded by the electrolyte, and thus, the silicon-based negative electrode active material has a relatively high capacity property to further improve cycle life of a battery.

In some embodiments, the coating layer is a carbon material coating layer. In the above scheme, the carbon material may include one or more of mesophase carbon microbeads (MCMB), pyrolytic carbon graphite derived from hydrocarbon compounds, hard carbon, and soft carbon.

In some embodiments, the carbon material may be present in an amount of 1.5-8wt% in the silicon-based negative electrode active material. In this scheme, the silicon-based negative electrode active material has further improved cycle life. A too low content of the carbon material results in insufficient stability and integrity of the coating layer, failing to effectively isolate the silicon-based negative electrode active material and the electrolyte. An excessively high content of the carbon material results in a decrease in the initial Coulombic efficiency.

In some embodiments, the silicon-based negative electrode active material has a specific surface area of 4 $m^2/g$ or less, optionally 0.5-1.5 $m^2/g$. Based on this scheme, the silicon-based negative electrode active material exhibits further improved cycle life.

In some embodiments, the silicon-based negative electrode active material has a BET specific surface area of 4 $m^2/g$ or less (e.g., 1-2 $m^2/g$, 2-3 $m^2/g$, 3-4 $m^2/g$). Based on this scheme, the silicon-based negative electrode active material exhibits improved cycle life. The above scheme avoids low initial efficiency caused by excessive consumption of active lithium when an SEI film is formed on the surface of the silicon-based negative electrode active material.

In some embodiments, the silicon-based negative electrode active material has a volume average particle diameter Dv50 of 4-15 $\mu$m, optionally 5-9 $\mu$m. Based on this scheme, the silicon-based negative electrode active material exhibits further improved cycle life.

In some embodiments, the silicon-based negative electrode active material has a volume average particle diameter Dv50 of 4-15 $\mu$m (e.g., 4-5 $\mu$m, 5-6 $\mu$m, 6-7 $\mu$m, 7-8 $\mu$m, 8-9 $\mu$m, 9-10 $\mu$m, 10-11 $\mu$m, 11-12 $\mu$m, 12-13 $\mu$m, 13-14 $\mu$m, or 14-15 $\mu$m). Based on this scheme, the silicon-based negative electrode active material exhibits improved cycle life. The silicon-based negative electrode active material in the above scheme achieves a balance of relatively good kinetics and the initial Coulombic efficiency.

In some embodiments, the silicon-based negative electrode active material has a particle size distribution ($D_V90$-$D_V10$) / $D_V50$ of 0.5-3.0, optionally 0.8-1.3. Based on this scheme, the silicon-based negative electrode active material exhibits further improved cycle life.

In some embodiments, the silicon-based negative electrode active material has a ratio of ($D_V90$-$D_V10$) / $D_V50$ of 0.5-3.0: 1 (e.g., 0.5-1: 1, 1-1.5: 1, 1.5-2: 1, 2-2.5: 1, or 2.5-3: 1). Based on this scheme, the silicon-based negative electrode active material exhibits improved cycle life, particularly improved kinetic performance.

In some embodiments, the content of element Si is 20-80 wt%, optionally 30-60 wt% in the silicon-based negative electrode active material. Based on this scheme, the silicon-based negative electrode active material exhibits further improved cycle life.

In some embodiments, the silicon-based negative electrode active material has a Si element content of 20-80wt% (e.g., 20-30wt%, 30-40wt%, 40-50wt%, 50-60wt%, 60-70wt%, or 70-80wt%). Based on this scheme, the silicon-based negative electrode active material exhibits improved cycle life.

In some embodiments, the total content of the alkaline earth metal elements is 2-14wt%, optionally 2-10wt% in the silicon-based negative electrode active material. Based on this scheme, the silicon-based negative electrode active material exhibits further improved cycle life.

In some embodiments, the silicon-based negative electrode active material has an alkaline earth metal content of 2-14wt% (e.g., 2-3%, 3-4%, 4-5%, 5-6%, 6-7%, 7-8%, 8-9%, 9-10%, 10-11%, 11-12%, 12-13%, or 13-14%). Based on this scheme, the silicon-based negative electrode active material exhibits improved initial Coulombic efficiency.

In some embodiments, the silicon-based negative electrode active material has the molar ratio of Si: O of 1: 0.6-1: 1.8, optionally 1: 0.9-1: 1.5; and

In some embodiments, the silicon-based negative electrode active material has a molar ratio of Si: O of 1: 0.6-1.8 (e.g., 1: 0.6-0.8, 1: 0.8-1, 1: 1-1.2, 1: 1.2-1.4, 1: 1.4-1.6, or 1: 1.6-1.8). Based on this scheme, the silicon-based negative electrode active material exhibits improved cycle life.

In some embodiments, M comprises at least one of Mg, Ca, Be, Sr, and Ba. Based on this scheme, the silicon-based negative electrode active material exhibits further improved cycle life.

In some embodiments, M comprises Mg. Based on this scheme, the silicon-based negative electrode active material exhibits further improved cycle life.

In a second aspect, the present application provides a method for preparing the above silicon-based negative electrode active material, comprising the steps of:

providing a raw material containing element Si, element O, and element M, M comprising one or more alkali metal elements;

heating the raw material to a first temperature to form a vapor by using a vapor deposition technique, and then cooling the vapor to a second temperature to form a deposit; and

pulverizing the deposit to obtain a pulverized product;

wherein the content of element M is 7% -10% in the raw material,

wherein the raw material is heated to the first temperature at a temperature increase rate of 10°C/min or less;

wherein the first temperature is 1100-1500°C; and

wherein the second temperature is 800-1000°C.

In the above scheme, to obtain the silicon-based negative electrode active material of the present application, the following is advantageous: controlling the content of the element Mg within a predetermined range (7%-10%) in the raw material, heating to a specific first temperature (1100°C-1500°C) by a specific heating increase rate (8°C/min - 15°C/min), and cooling to a specific second temperature (700°C-900°C). In general, the greater the temperature increase rate is, the greater the half peak width is; and the higher the heat treatment temperature is, and the longer the time is, the smaller the half peak width is. A person skilled in the art can obtain the silicon-based negative electrode active material of the present application according to the above respective parameter ranges by a limited number of experiments. Based on this scheme, the prepared silicon-based negative electrode active material exhibits improved initial Coulombic efficiency and/or cycle life.

In the above scheme, to obtain a silicon-based negative electrode active material having a ratio of the half peak width $\beta_A$ of the first diffraction peak to the half peak width $\beta_B$ of the second diffraction peak of $1.0 \leq \beta_A / \beta_B \leq 5$, the following is advantageous: controlling the content of element M within a predetermined range (8%-8.5%) in the raw material, heating to a specific first temperature (1000°C-1500°C) by a specific heating increase rate (8°C/min - 12°C/min), and cooling to a specific second temperature (800°C-900°C). $\beta_A / \beta_B$ is too small with a too high content of element M, a too high temperature increase rate, a too high first temperature, and a too low second temperature. $\beta_A / \beta_B$ is too large with a too low content of element M, a too low temperature increase rate, a too low first temperature, and a too high second temperature.

In some embodiments, the raw material includes elemental silicon, silicon dioxide, and an alkaline earth metal source.

In some embodiments, the alkaline earth metal source comprises one or more of an elementary substance of elemental M, a salt of elemental M (e.g., carbonate, nitrate, acetate, phosphate, oxalate, etc.), an oxide of elemental M, and a hydroxide of elemental M.

In some embodiments, the Mg element source comprises one or more of an elementary substance of elemental Mg, a salt of elemental Mg (e.g., carbonate, nitrate, acetate, phosphate, oxalate, etc.), an oxide of elemental Mg, and a hydroxide of elemental Mg.

In some embodiments, after being heated, the elementary silicon substance and silicon dioxide can form a silicon oxide gas containing elements Si and O, so as to obtain a silicon-based negative electrode active material by further deposition. For the elementary silicon substance, metallic silicon (also referred to as industrial silicon), polycrystalline silicon, or single crystal silicon which is commonly used in the art can be used. The purity of the elementary silicon substance may be 99.9% or more, 99.99% or more, or 99.999% or more.

In some embodiments, the first temperature is 1100°C-1500°C when performing vapor deposition. In the above scheme, the respective raw materials can be simultaneously gasified to generate mixed silicon oxide vapor having uniform composition, and the material obtained by deposition have uniformly distributed silicon element and oxygen element. It is advantageous to obtain a silicon-based negative electrode active material having a ratio of $\beta_A$ to $\beta_B$ of 1-5: 1.

In some embodiments, the cooling temperature is 800°C-900°C when vapor deposition is performed. In the above scheme, the silicon-based negative electrode active material has a relatively good crystallite size and suitable crystallinity, so that the silicon-based negative electrode active material has relatively high initial Coulombic efficiency and cycle performance.

In some embodiments, vapor deposition is performed with an absolute pressure of 40 Pa or less. Based on this scheme, the vapor can be formed relatively quickly in the step of vapor deposition.

In some of the above schemes, the operation of pulverizing the deposit comprises an operation of subjecting the deposit to coarse crushing - fine grinding - grading according to a predetermined volume average particle size (Dv50) and specific surface area parameters of a product to obtain the product with the predetermined parameters. In some embodiments, the deposit may be crushed and graded using any method and apparatus known in the art, such as a mill, or a jet mill-grading machine.

In some embodiments, the alkali metalation temperature of 450°C-800°C is advantageous for obtaining a suitable degree of alkali metalation for the silicon-based negative electrode active material, so that the silicon-based negative electrode active material has relative high initial Coulombic efficiency and cycle performance. When the temperature is lower than 500°C, the degree of alkali metalation for the material may be insufficient, affecting the initial Coulombic efficiency of the material; and when the temperature is higher than 800°C, the material may have an excessively large grain size, affecting the cycle performance of the material.

In some embodiments, the method for preparing the silicon-based negative electrode active material further comprises a step of coating the silicon-based negative electrode active material, optionally, the coating treatment is a carbon material coating treatment, and more optionally, the carbon material coating treatment comprises operations of: placing the silicon-based negative electrode active material in a chamber containing a carbon source gas, heating to 700-1000°C, and maintaining the temperature for 1-6 h.

In some embodiments, the surface of the silicon-based negative electrode active material is coated with a liquid coating method to form a coating layer. For example, a polymer is dissolved in a certain solvent, and is uniformly mixed with particles of the silicon-based negative electrode active material by sufficient stirring, then the solvent is removed by evaporation, and the polymer is uniformly coated on the surface of the particles of the silicon-based negative electrode active material.

In some embodiments, the surface of the silicon-based negative electrode active material is coated by chemical vapor deposition to form a coating layer. For example, a carbon source gas (e.g., a hydrocarbon compound gas) is introduced into a reactor containing the silicon-based negative electrode active material, and heat treatment is performed to carbonize the carbon source gas to form a coating layer coated on the surface of the silicon-based negative electrode active material, thereby obtaining the silicon-based negative electrode active material having a coating layer on its surface.

In some embodiments, the method for preparing a negative electrode active material further comprises a step of subjecting the pulverized product to a coating treatment.

In some embodiments, the coating treatment comprises a carbon coating treatment and/or an alkali metal ion conductor coating treatment.

In some embodiments, the carbon coating treatment comprises operations of: placing the object to be coated in a deposition chamber containing a carbon source gas and carbonizing and depositing the carbon source gas by heating to form a carbon material-containing coating layer.

In some embodiments, the carbon source gas accounts for 5-15% of the total gas volume within the deposition chamber. The deposition chamber may also contain a non-oxidizing gas such as nitrogen or an inert gas.

In some embodiments, the carbon source gas includes one or more of acetylene, methane, ethylene, propane, ethane, propylene, propyne, and toluene.

In some embodiments, the alkali metal ion conductor coating treatment comprises the operations of: placing the object to be coated in a chamber containing a source for forming an alkali metal ion conductor, forming a source deposit by the source for forming an alkali metal ion conductor by heating to form a coating layer containing the alkali metal ion conductor coating.

In some embodiments, the source for forming an alkali metal ion conductor refers to a substance capable of forming an alkali metal ion conductor upon sintering. The source for forming an alkali metal ion conductor comprises, for example, alkali metal hydroxides and phosphates. The source for forming an alkali metal ion conductor comprises, for example, alkali metal hydroxides and ammonium hydrogen phosphates.

In some embodiments, in the carbon coating treatment, the heating temperature is 700-1000°C

In some embodiments, in the carbon coating treatment, the heating time is 1-6 h.

In some embodiments, in the alkali metal ion conductor coating treatment, the heating temperature is 600-800°C

In some embodiments, in the carbon coating treatment, the heating time is 1-6 h.

In some embodiments, the carbon coating treatment comprises operations of: placing a crushed product in a deposition chamber containing a carbon source gas, raising the temperature to 450 -800°C at a temperature increase rate of 5°C/min or less, and maintaining the temperature for 3-10 h.

In some embodiments, as an example, the negative current collector has two surfaces opposite in its own thickness direction, and the negative film layer is provided on either one or both of the two opposite surfaces of the negative current collector.

In some embodiments, for the negative current collector, a metal foil sheet or composite current collector can be employed. For example, for a copper foil sheet, a metal foil may be used. The composite current collector may include a high-molecule material base layer and a metal layer formed on at least one surface of the high-molecule material substrate. The composite current collector may be formed by forming a metal material (copper, a copper alloy, nickel, a nickel alloy, titanium, a titanium alloy, silver, a silver alloy, and the like) on a substrate of a high-molecule material (such as a substrate of polypropylene (PP), polyethylene terephthalate (PET), polybutylene terephthalate (PBT), polystyrene (PS), polyethylene (PE), and the like).

In some embodiments, the negative film layer optionally further comprises a binder. As an example, the binder may comprise at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some embodiments, the negative film layer further optionally includes a conductive agent. As an example, the conductive agent may include at least one of superconducting carbon, acetylene black, carbon black, ketjen black, carbon dot, carbon nanotube, graphene, and carbon nanofiber.

In some embodiments, the negative film layer may also optionally include other adjuvants, such as a thickening agent (e.g., sodium carboxymethylcellulose (CMC-Na)), etc.

In some embodiments, the negative film layer may further include an negative electrode active material known in the art other than the present application, and the material may be selected by a person skilled in the art according to actual requirements. Examples of the material may include, but not limited to, one or more of artificial graphite, natural graphite, hard carbon, soft carbon, other silicon-based materials, and tin-based materials. The other silicon-based materials may include one or more of elemental silicon, a silicon-oxygen composite different from that in the present application, a silicon-carbon composite, a silicon-nitrogen composite, and a silicon alloy. The tin-based materials may include one or more of elemental tin, a tin oxide compound, and a tin alloy. These materials are all commercially available.

In some embodiments, the negative tab may be prepared by dispersing the above-mentioned components for preparing a negative tab, for example, the silicon-based negative electrode active material, the conductive agent, the binder, and any other components, in a solvent (for example, deionized water) to form a negative-electrode slurry, and applying the slurry on a negative current collector, followed by drying, cold pressing, and the like to obtain a negative tab.

[Positive Tab]

In some embodiments, a positive tab generally includes a positive current collector and a positive film layer disposed on at least one surface of the positive current collector, the positive film layer comprising a positive active material.

As an example, the positive current collector has two surfaces opposite in its own thickness direction, and the positive film layer is provided on either one or both of the two opposite surfaces of the positive current collector.

In some embodiments, for the positive current collector, a metal foil sheet or composite current collector can be employed. For example, for a metal foil sheet, an aluminum foil can be used. The composite current collector may include a high-molecule material base layer and a metal layer formed on at least one surface of the high-molecule material base layer. The composite current collector may be formed by forming a metal material (aluminum, an aluminum alloy, nickel, a nickel alloy, titanium, a titanium alloy, silver, a silver alloy, and the like) on a substrate of a high-molecule material (such as a substrate of polypropylene (PP), polyethylene terephthalate (PET), polybutylene terephthalate (PBT), polystyrene (PS), polyethylene (PE), and the like).

In some embodiments, the positive film layer optionally further comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive film layer further optionally includes a conductive agent. As an example, the conductive agent may include at least one of superconducting carbon, acetylene black, carbon black, ketjen black, carbon dot, carbon nanotube, graphene, and carbon nanofiber.

In some embodiments, the positive tab may be prepared by dispersing the above-mentioned components for preparing a positive tab, for example, a positive electrode active material, a conductive agent, a binder, and any other components in a solvent (for example, N-methylpyrrolidone) to form a positive-electrode slurry, and applying the positive electrode slurry to a positive current collector, followed by drying, cold pressing, and the like to obtain a positive tab.

[Positive Electrode Active Material]

In some embodiments, a positive electrode active material may be the one known in the art for a secondary battery.

As an example, the positive electrode active material may include at least one of an olivine-structured lithium-containing phosphate, a lithium-transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Here, examples of the lithium transition metal oxide may include, but not limited to, at least one of a lithium cobalt oxide (e.g., $LiCoO_2$), a lithium nickel oxide (e.g., $LiNiO_2$), a lithium manganese oxide (e.g., $LiMnO_2$,

$LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM)_{333}$), $LiNi_{0.5}Co_{0.2}Mn_{0.3}O_2$ (also referred to as $NCM)_{523}$), $LiNi_{0.5}Co_{0.25}Mn_{0.25}O_2$ (also referred to as $NCM)_{211}$), $LiNi_{0.6}Co_{0.2}Mn_{0.2}O_2$ (also referred to as $NCM)_{622}$), $LiNi_{0.8}Co_{0.1}Mn_{0.1}O_2$ (also referred to as $NCM)_{811}$), a lithium nickel cobalt aluminum oxide (e.g., $Li-Ni_{0.85}Co_{0.15}Al_{0.05}O_2$), a modified compound thereof and the like. Examples of olivine-structured lithium-containing phosphate may include, but not limited to, at least one of lithium iron phosphate (e.g., $LiFePO_4$ (may also be referred to as LFP)), a composite of lithium iron phosphate and carbon, lithium manganese phosphate (such as $LiMnPO_4$), a composite material of lithium manganese phosphate and carbon, lithium manganese phosphate, and a composite material of lithium manganese phosphate and carbon.

[Electrolyte]

An electrolyte functions to conduct ions between the positive tab and the negative tab. In the present application, the type of the electrolyte is not particularly limited, and may be selected as needed. For example, the electrolyte may be liquid or gel, or in an all-solid state.

In some embodiments, the electrolyte is liquid and includes an electrolyte salt and a solvent.

In some embodiments, the electrolyte salt comprises sodium perchlorate, sodium hexafluorophosphate, sodium tetrafluoroborate, and sodium hexafluoroarsenate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

In some embodiments, the electrolyte optionally further comprises an additive. As an example, the additive may include a negative electrode film-forming additive, and a positive electrode film-forming additive, and may further include an additive capable of improving certain performance of a battery, for example, an additive improving overcharge performance of a battery, an additive improving high-temperature or low-temperature performance of a battery, and the like.

[Separator]

In some embodiments, a separator is further included in a secondary battery. The type of the separator is not particularly limited in the present application, and any known porous separator having good chemical stability and mechanical stability may be used.

In some embodiments, the material of the separator may include at least one of glass fiber, nonwoven fabric, polyethylene, polypropylene, and polyvinylidene fluoride. The separator may be a single layer film or a multilayer composite film, and is not particularly limited. When the separator is a multilayer composite film, the materials of the respective layers may be the same or different and are not particularly limited.

In some embodiments, the positive tab, the negative tab, and the separator may be manufactured into an electrode assembly by a winding process or a lamination process.

In some embodiments, the secondary battery may include an outer package. The outer package may be used to enclose the electrode assembly and the electrolyte mentioned above.

In some embodiments, the outer package of the secondary battery may be a hard shell, such as a hard plastic shell, an aluminum shell, a steel shell, or the like. The outer package of the secondary battery may also be a pouch, such as a bag-type pouch. The material of the pouch may be plastic, examples thereof including polypropylene, polybutylene terephthalate, polybutylene succinate, etc.

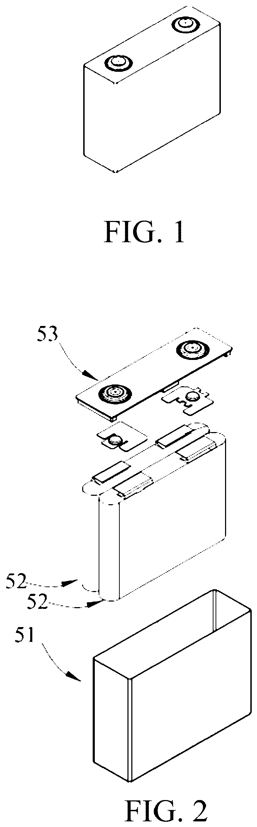

The shape of the secondary battery is not particularly limited in the present application, and may be cylindrical, square, or any other shape. For example, FIG. 1 shows a secondary battery 5, as an example, with a square structure.

In some embodiments, referring to the exploded view of the secondary battery 5 shown in FIG. 2, the outer package of the secondary battery 5 may include a housing 51 and a cover plate 53. Here, the housing 51 may include a bottom plate and a side plate connected to the bottom plate, and the bottom plate and the side plate define a accommodation chamber. The housing 51 has an opening communicating with an accommodation chamber, and the cover plate 53 can cover the opening to close the accommodation chamber. The positive tab, the negative tab, and the separator may be formed into the electrode assembly 52 by a winding process or a lamination process. The electrode assembly 52 is enclosed within the accommodation chamber. The electrode assembly 52 is soaked in the electrode assembly 52. The secondary battery 5 may have one or more electrode assemblies 52, and those skilled in the art may make selections according to specific practical requirements.

In some embodiments, the secondary battery may be assembled into a battery module, and it may include one or more secondary batteries, with the specific number that may be selected by those skilled in the art according to the application and capacity of the battery module.

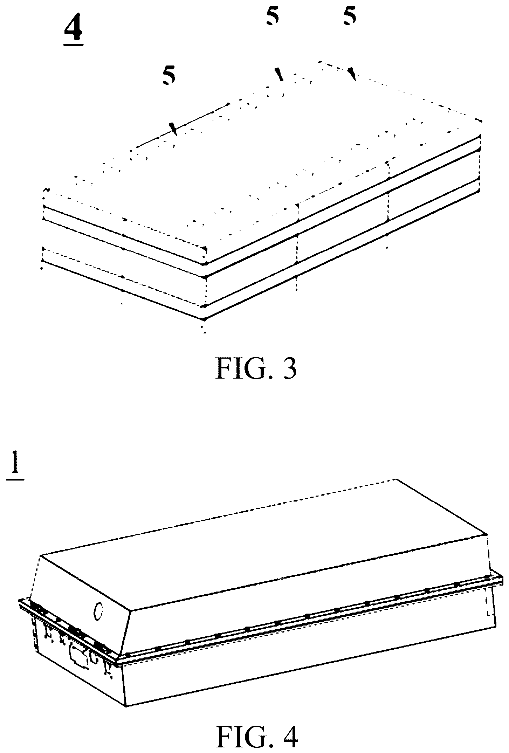

FIG. 3 shows a battery module 4 as an example. Referring to FIG. 3, in the battery module 4, a plurality of secondary batteries 5 may be arranged sequentially in the longitudinal direction of the battery module 4. Of course, any other arrangement manners may be possible. Further, the plurality of secondary batteries 5 may be fixed by a fastener.

Alternatively, the battery module 4 may further include a housing having an accommodation space in which the plurality of secondary batteries 5 are accommodated.

In some embodiments, the battery modules described above may be further assembled into a battery pack, and it may include one or more battery modules, with the specific number that may be selected by those skilled in the art according to the application and capacity of the battery pack.

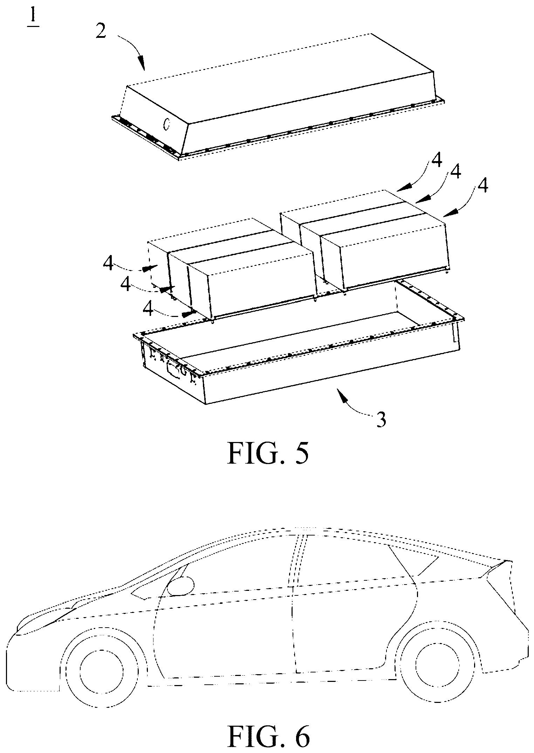

FIGS. 4 and 5 show a battery pack 1 as an example. Referring to FIGS. 4 and 5, the battery pack 1 may include a battery box and a plurality of battery modules 4 provided in the battery box. The battery box includes an upper box body 2 and a lower box body 3, and the upper box body 2 can cover the lower box body 3 to form a closed space for accommodating the battery modules 4. The plurality of battery modules 4 may be arranged in any manner in the battery box.

In addition, the present application also provides an electrical device including at least one of the secondary battery, the battery module, or the battery pack provided by the present application. The secondary battery, the battery module, or the battery pack may be used as a power source or an energy storage unit of the electrical device. The electrical device may include, but not limited to, a mobile apparatus (e.g., a cellular phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

For the electrical device, the secondary battery, battery module, or battery pack may be selected according to use requirements for the electrical device.

FIG. 6 is an electrical device as an example. The electrical device is a pure electric vehicle, a hybrid electric vehicle, a plug-in hybrid electric vehicle, or the like. For the high power and high energy density of the secondary battery required by the electrical device, the battery pack or the battery module may be used.

Examples of the present application will be described below. The examples described below are illustrative only to explain the present application, and are not to be construed as limiting the present application. In the examples, a process for which specific techniques or conditions are not indicated is performed according to the techniques or conditions described in documents in the art or according to a product specification. Used reagents or instruments whose manufacturers are not indicated are commercially available conventional products.

1. Components of Silicon-Based Negative Electrode Active Material

The following example provides a silicon-based negative electrode active material. In the following example, the silicon-based composite may be understood as a composite structure in which various nanocrystals are dispersed in a silicon oxide matrix, for example, a structure in which Si grains and $MSiO_3$ grains are dispersed in a silicon oxide material. (M includes one or more alkaline earth metal elements, and M includes Mg in the following example). The silicon-based negative electrode active material is further coated with a $Li_3PO_4$ coating layer and a carbon material coating layer.

2. Preparation Method of Silicon-Based Negative Electrode Active Material

In the following specific embodiments, the preparation method of the silicon-based negative electrode active material is described in detail.

1) 30g of metallic silicon powder (a silicon element content: 99.8%), 60g of silicon dioxide ($SiO_2$) powder, and metal magnesium were mixed to obtain a raw material (see table 1 for the content of element Mg in the raw material).

2) The raw material composition was heated to a first temperature at a preset temperature increase rate in a helium atmosphere having an absolute pressure of 20 Pa to form a vapor containing element Si, element Mg, and element O. (See table 1 for the temperature increase rate and first temperature)

3) The vapor was cooled to a deposition temperature in a helium atmosphere having an absolute pressure of 20 Pa, so that the vapor was deposited to obtain a deposit. (See table 1 for the deposition temperature)

4) The deposit was subjected to coarse crushing - fine grinding - grading to obtain a crushed product.

5) The crushed product was subjected to a carbon coating treatment by using a vapor deposition apparatus under normal pressure, using a mixed gas of acetylene and nitrogen (20 vol% of acetylene, and 80 vol% of nitrogen) as a carbon source gas, and heating at 800°C for 2 hours, so as to form a coating layer containing a carbon material.

6) A product (2g) having a carbon coating layer, LiOH (0.17 mol) and $(NH_4)_2HPO_4$ (0.17 mol) were ground and mixed uniformly, and the mixture was put into a heat treatment apparatus (such as a CVD rotary kiln) and heated at 700°C for 2 h in a nitrogen atmosphere to form a coating layer containing $Li_3PO_4$, i.e., the product, a negative electrode active material, was obtained.

According to the above-described method, a plurality of silicon-based negative electrode active material samples (hereinafter referred to as samples) each having feature parameters distinguished from each other as shown in Table 1 were prepared.

(1) The XRD pattern of the samples has a first diffraction peak (between 28 and 28.6°) corresponding to an Si (111) crystal plane, where the half peak width of the first diffraction peak is $\beta_A°$, and the intensity is $I_A$, and the grain size of the corresponding Si crystal grains is $D_A$;
(2) The XRD pattern of the samples has a second diffraction peak (between 31-32°) corresponding to an $MSiO_3$ (310) crystal plane (M includes Mg), where the half peak width of the second diffraction peak is $\beta_B°$, and the intensity is $I_B$, and the crystal grain size of the corresponding $MSiO_3$ crystal grain is $D_B$.

In addition to the above-mentioned feature parameters, other parameters of these samples are substantially the same, and are as follows.

a) The negative electrode active material has a coating layer containing a carbon material, wherein the content of the carbon material is within 5wt% in the negative electrode active material, and the content of $Li_3PO_4$ is 0.5wt% in the negative electrode active material;

b) the silicon-based negative electrode active material has the element Mg content of $8.0\pm1\%$;

c) the silicon-based negative electrode active material has the Si content of $56\pm4\%$;

d) the molar ratio of silicon to oxygen is $x = 1.0\pm0.1$ in the silicon-based negative electrode active material;

e) the silicon-based negative electrode active material has a BET specific surface area of $1.3 \pm 0.05$ M/g;

f) the silicon-based negative electrode active material has a volume average particle diameter $D_V50$ of $6.0\pm1$ $\mu$m;

g) the silicon-based negative electrode active material has a ratio of $(D_V90-D_V10) / D_V50$ of $1.05\pm0.05$; and

h) the ratio of the peak intensity of the first diffraction peak to the peak intensity of the second diffraction peak is $I_A:I_B= 3.5: 1$.

Hereafter, the above described silicon-based negative electrode active material is assembled into a button battery, and electrochemical performance analysis is performed.

2. Detection Method

2.1 Half Peak Width and Grain Size

A half peak width and a grain size, having the meaning known in the art, can be measured using a method known in the art. For example, an XRD pattern of a sample is detected according to Test Standard JIS / K 0131 1996, wherein a corresponding diffraction peak of a target crystal is located according to the XRD pattern of the sample, and a half peak width and a peak height are determined based on the diffraction peak.
The half peak width is the peak width at the half height of the XRD diffraction peak. That is, a straight line parallel to the bottom of the peak is drawn through the midpoint of the peak height, and the distance between the intersection points of the straight line with both sides of the peak is the half peak width in degrees.
The peak height refers to a peak height (a peak value ordinate) of a diffraction peak.
The standard card data with PDF No. 01-075-0589 can be used to identify the first diffraction peak corresponding to the (111) crystal plane of the Si grains, where the diffraction angle $2\theta$ of the first diffraction peak is between 26 and 26.8°.

The standard card data with PDF No. 00-035-0610 can be used to identify the second diffraction peak corresponding to the (310) crystal plane of the $MgSiO_3$ grains, where the diffraction angle $2\theta$ of the second diffraction peak 20 is between 31 and 32°.

Crystal grain size calculation is as follows: the half peak width $\beta$ and diffraction angle $\theta$ of the diffraction peaks are measured for the Si (111) crystal plane and $MSiO_3$ (310) crystal plane, and are used in the Debye-Scherrer equation to obtain corresponding crystal grain sizes.

The Debye-Scherrer equation is as follows:

$$D_{hkl}=k\lambda/\beta\cos\theta$$

$D_{hkl}$ - a grain size in nm, k-Scherrer Constant, k = 0.89, $\lambda$ - a wavelength of an incident X-ray, $\lambda$ = 0.15406 nm; and

$\beta$ - a peak width at half height of a diffraction peak in °; and $\theta$ - a diffraction angle in °.

The crystal grain size is calculated from the half peak width of the XRD diffraction peak, and the half peak width is negatively related to the crystal grain size, where the larger the half peak width is, the smaller the crystal grain size is.

The test results of the above parameters are shown in table 1.

2.2 Content Testing for Alkaline Earth Metal Element and Silicon Element

The element content, having the meaning known in the art, can be measured using a method known in the art. For example, the content of the alkaline earth metal element and the content of the silicon element can be measured by inductively coupled plasma (ICP). Specifically, a sample to be tested is taken and digested with aqua regia and HF, and the solution after digesting is tested for the content of the total alkaline earth metal element (e.g., lithium) and the content of Si.

2.3 BET Specific Surface Area Testing

A specific surface area of a material, having the meaning known in the art, can be measured using a method known in the art. For example, with reference to GB/T 19587 2017, the specific surface area may be obtained by using a specific surface area testing method with nitrogen adsorption and using the BET (Brunauer Emmett Teller) method for calculation, wherein the specific surface area testing method with nitrogen adsorption may be performed by a Tri-Star 3020 Specific Surface Area Pore Size Analysis Tester from Micromeritics, USA.

2.4 Particle Size Testing

Dv10, Dv50, Dv90 of a material, having the meaning known in the art, can be measured using a method known in the art. Dv10, Dv50, and Dv90 may be measured, for example, with reference to standard GB/T 19077 2016, using a laser particle size analyzer (e.g. Malvern Master Size 3000).

Here, physically, Dv10, Dv50, and Dv90 are defined as follows: the corresponding particle sizes when cumulative volume distribution percentages of the silicon-based negative electrode active material are 10%, 50%, and 90%, respectively.

2.5 Initial Coulombic Efficiency

(1) Preparation of Button Battery

Preparation of Negative Tab: the silicon-based negative electrode active material prepared above, conductive agent Super-P (conductive carbon black), and binder PAA (polyacrylic acid) are mixed by sufficient stirring at a mass ratio of 85: 5: 10 in an appropriate amount of deionized water to form a uniform negative electrode slurry, and the slurry is applied on a surface of a copper foil as an negative current collector, followed by drying, and cold pressing to obtain a negative tab.

Counter electrode: a lithium metal sheet.

Separator: a polyethylene (PE) thin film.

Preparation of Electrolyte: ethylene carbonate (EC), ethyl methyl carbonate (EMC), and diethyl carbonate (DEC) are mixed in a volume ratio of 1: 1: 1, and then $LiPF_6$ is uniformly dissolved in the above obtained solution to obtain an electrolyte, and fluoroethylene carbonate (FEC) is added, wherein the concentration of $LiPF_6$ is 1 mol/L, and the mass ratio of FEC is 6% in the electrolyte.

Assembling of Button Battery: the negative tab, the separator, and the counter electrode of the metal lithium sheet are laminated sequentially, and the electrolyte solution above is added to obtain a button battery.

(2) Initial Coulombic Efficiency Testing

The battery is left for standing at room temperature for 3 h, then is discharged at a constant current of 0.05C to a voltage of 0.005V, and further discharged at a constant current of 50 μA to a voltage of 0.005V, and at this point, a capacity is recorded as the initial lithium intercalation capacity ($C_2$). After standing for 5 min, the button battery is charged at a rate of 0.1C to a voltage of 2 V, and at this point, a capacity is recorded as the initial lithium delithiation capacity ($C_1$).

Material Initial Efficiency (%) = (initial lithium delithiation capacity $C_1$/initial lithium intercalation capacity $C_2$) * 100%

The test results of the above parameters are shown in table 1.

2.8 Material Cycle Life Testing

(1) Preparation of Total Battery

1. Preparation of Positive Tab

$LiNi_{1/3}Co_{1/3}Mn_{1/3}O_2$(NCM333) as a positive electrode active material, conductive carbon black, and polyvinylidene fluoride (PVDF) as a binder were sufficiently stirred and mixed in a weight ratio of 93: 2: 5 in an appropriate amount of a solvent of N-methylpyrrolidone (NMP) to form a uniform positive electrode slurry, and the slurry was applied to the surface of a positive current collector, followed by drying to obtain a positive tab.

2. Preparation of Negative Tab

A silicon-based negative electrode active material (a silicon-oxygen composite material), conductive carbon black, sodium carboxymethyl cellulose (CMC) as a thickener, and styrene-butadiene rubber emulsion (SBR) as a binder were mixed at a weight ratio of 96.5: 1.0: 1.0: 1.5 by sufficient stirring in an appropriate amount of deionized water to form a uniform negative electrode slurry, and the slurry was applied on a negative current collector, followed by the steps such as drying to obtain a negative tab.

3. Preparation of Electrolyte

Ethylene carbonate (EC), ethyl methyl carbonate (EMC), and diethyl carbonate (DEC) were mixed at a volume ratio of 1: 1: 1 to obtain an organic solvent, and sufficiently dried lithium salt $LiPF_6$ was dissolved in the mixed organic solvent to prepare an electrolyte having a concentration of 1 mol/L.

4. Preparation of Total Battery

The positive tab, PP separator, and negative tab were laminated sequentially, and wound into a battery cell, it is loaded into a package housing, and the electrolyte above is injected into a battery cell, followed by the steps such as sealing, standing, hot/cold pressing, and battery formation to obtain a secondary battery.

(2) Cycle Performance Testing at 25°C

At 25°C, the secondary batteries prepared in Examples and Comparative Examples were subjected to the following one charge-discharge cycle: constant-current charging at a rate of 1C to an end-of-charge voltage V1, constant-voltage charging to a current ≤ 0.05C, standing for 5 min, constant-current discharging at a rate of 0.33C to an end-of-discharge voltage V2, and standing for 5 min. According to this method, the battery was subjected to a cyclic charge-discharge test until the battery capacity was attenuated to 80%. At this point, the number of cycles is the cycle life of the battery.

The test results of the above parameters are shown in table 1.

Table 1

| | Raw Materials and Reaction Conditions | | | | Si (111) | | MgSiO$_3$ (310) | | Half Peak Width Ratio | Battery Performance | |
|---|---|---|---|---|---|---|---|---|---|---|---|
| | Alkaline Earth Metal Element wt% | Temperature Increase Rate °C/min | First Temperature °C | Deposition Temperature °C | $\beta_A$ /° | $D_A$ /nm | $\beta_B$ /° | $D_B$ /nm | $\beta_A$:$\beta_B$ | Initial Efficiency (IC)% | Cycle Life/Cycle |
| E1 | 9 | 8 | 1400 | 900 | 0.68 | 12.0 | 0.451 | 18.1 | 1.5 | 84.6 | 500 |
| E2 | 9 | 15 | 1360 | 900 | 0.92 | 8.8 | 0.46 | 17.7 | 2.0 | 84.3 | 550 |
| E3 | 9 | 12 | 1340 | 870 | 1.15 | 7.1 | 0.463 | 17.6 | 2.5 | 83.9 | 630 |
| E3 | 8 | 10 | 1380 | 900 | 1.38 | 5.9 | 0.467 | 17.5 | 3.0 | 83.5 | 740 |
| E5 | 8 | 10 | 1350 | 880 | 1.55 | 5.2 | 0.47 | 17.3 | 3.3 | 83.2 | 850 |
| E6 | 8 | 8 | 1330 | 850 | 1.69 | 4.8 | 0.472 | 17.3 | 3.6 | 83.0 | 1100 |
| E7 | 8 | 10 | 1350 | 800 | 1.88 | 4.3 | 0.475 | 17.2 | 4.0 | 82.0 | 1000 |
| E8 | 8 | 12 | 1300 | 850 | 2.16 | 3.8 | 0.48 | 17.0 | 4.5 | 81.5 | 950 |
| E9 | 8 | 8 | 1200 | 850 | 2.45 | 3.3 | 0.49 | 16.6 | 5.0 | 81.0 | 900 |
| D1 | 10 | 10 | 1550 | 900 | 0.37 | 21.9 | 0.41 | 19.9 | 0.9 | 83.0 | 350 |
| D2 | 8 | 10 | 1050 | 650 | 2.59 | 3.1 | 0.48 | 17.0 | 5.5 | 78.0 | 600 |

* $\beta_A$, and $\beta_B$ are the half peak widths of the diffraction peaks corresponding to Si (111), and MgSiO$_3$ (310), respectively.
* Initial Efficiency (IC) is First Week Coulombic Efficiency

3. Results

As shown in able 1, in the process for preparing samples E1- E10, to obtain the silicon-based negative electrode active material where a ratio of the half peak width $\beta_A$ of the first diffraction peak to the half peak width $\beta_B$ of the second diffraction peak enables $1.0 \leq \beta_A / \beta_B \leq 5$, the following is advantageous: controlling the content of the element Mg within a predetermined range (7%-10%) in the raw material, heating to a specific first temperature (1100°C-1500°C) by a a specific heating increase rate (8°C/min - 15°C/min), and cooling to a specific second temperature (700°C-900°C). In contrast, the process parameters for sample D1 are outside the above ranges. For example, the first temperature is 1050°C, and only a silicon-based negative electrode active material with $\beta_A / \beta_B = 0.9$ can be obtained. The process parameters for sample D2 are outside the above ranges. For example, the deposition temperature is 650°C, and only a silicon-based negative electrode active material with $\beta_A / \beta_B = 5.5$ can be obtained.

As shown in samples E1- E9, their $\beta_A$: $\beta_B$ values are 1.5 - 5: 1, the initial Coulombic efficiency of their batteries is more than 81%, and the capacity retention rate of the batteries is attenuated to 80% after cycling at 25°C for more than 580 weeks.

As shown in samples E3- E9, their $\beta_A$: $\beta_B$ values are 2.5 - 5: 1, the initial Coulombic efficiency of their batteries is more than 83.9%, and the capacity retention rate of the batteries is attenuated to 80% after cycling at 25°C for more than 700 weeks.

As shown in samples E3- E7, their $\beta_A$: $\beta_B$ values are 2.5 - 4: 1, the initial Coulombic efficiency of their batteries is more than 82%, and the capacity retention rate of batteries is attenuated to 80% after cycling at 25°C for more than 700 weeks.

As a control, sample D1 has the $\beta_A$: $\beta_B$ value of 0.9 (< 1.5), and initial Coulombic efficiency of only 83.4%, and its battery has the capacity retention rate that is attenuated to 80% after cycling at 25°C for 450 weeks.

As a control, sample D2 has the $\beta_A$: $\beta_B$ value of 5.5 (>5.0), and has the initial Coulombic efficiency of 78%, and its battery has the capacity retention rate that is attenuated to 80% after cycling at 25°C for 680 weeks.

It should be noted that the present application is not limited to the above-described embodiment. The above-described embodiment is merely an example, and the technical scope of the present application includes the embodiment having the configuration with substantially the same technical concept and exhibiting the same effect within the scope of the technical scheme of the present application. Additionally, the scope of the present application also include various modifications conceived by those skilled in the art made to the embodiments, and other embodiments constructed by combining some constituent elements in the embodiment without departing from the spirit of the present application.

**Claims**

1. A silicon-based negative electrode active material, comprising Si and $MSiO_3$, where M comprises one or more alkaline earth metal elements, having, in an XRD diffraction pattern of the silicon-based negative electrode active material, a first diffraction peak at a diffraction angle 2θ between 26° and 26.8° having a half peak width of $\beta_A$, and a second diffraction peak at a diffraction angle 2θ between 31° and 32° having a half peak width of $\beta_B$, where in the silicon-based negative electrode active material, it has $1.5 \leq \beta_A / \beta_B \leq 5.0$.

2. The silicon-based negative electrode active material according to claim 1, wherein the ratio of $\beta_A$ to $\beta_B$ satisfies $2.0 \leq \beta_A / \beta_B \leq 5.0$, optionally $2.5 \leq \beta_A / \beta_B \leq 4.0$.

3. The silicon-based negative electrode active material according to any one of claims 1-2, wherein $1° \leq \beta_A \leq 3°$, optionally $1° \leq \beta_A \leq 2°$.

4. The silicon-based negative electrode active material according to any one of claims 1-3, wherein $0.2° \leq \beta_B \leq 1.0°$, optionally $0.3° \leq \beta_B \leq 0.5°$.

5. The silicon-based negative electrode active material according to any one of claims 1-4, wherein the grain size of the Si is smaller than that of the $MSiO_3$.

6. The silicon-based negative electrode active material according to any one of claims 1-5, wherein

   the grain size of the Si is less than or equal to 12 nm, and optionally is 2 nm-10 nm; and
   the grain size of the $MSiO_3$ is greater than or equal to 11 nm, and optionally is 12 nm-18 nm.

7. The silicon-based negative electrode active material according to any one of claims 1-6, wherein the intensity ratio of the first diffraction peak to the second diffraction peak is 1-5: 1, optionally 2-4: 1.

8. The silicon-based negative electrode active material according to any one of claims 1-7, wherein at least a part of a surface of the silicon-oxygen composite has a coating layer; and optionally, the coating layer comprises one or more of a carbon material and an alkali metal ion conductor material.

9. The silicon-based negative electrode active material according to any one of claims 1-8, having one or more of the following features:

   a) the silicon-based negative electrode active material has a specific surface area of 4 $m^2/g$ or less, optionally 0.5-1.5 $m^2/g$;
   b) the silicon-based negative electrode active material has a volume average particle diameter Dv50 of 4-15 $\mu$m, optionally 5-9 $\mu$m;
   c) the silicon-based negative electrode active material has a particle size distribution $(D_V90-D_V10) / D_V50$ of 0.5-3.0, optionally 0.8-1.3;
   d) the content of element Si is 20-80wt%, optionally 30-60wt% in the silicon-based negative electrode active material;
   e) the total content of the alkaline earth metal elements is 2-14wt%, optionally 2-10wt% in the silicon-based negative electrode active material;
   f) the silicon-based negative electrode active material has the molar ratio of Si: O of 1: 0.6-1: 1.8, optionally 1: 0.9-1: 1.5; and
   g) M comprises at least one of Mg, Ca, Be, Sr, and Ba.

10. A method for preparing a silicon-based negative electrode active material according to any one of claims 1-9, comprising:

    providing a raw material containing element Si, element O, and element M, M comprising one or more alkali metal elements;
    heating the raw material to a first temperature to form a vapor by using a vapor deposition technique, and then cooling the vapor to a second temperature to form a deposit; and
    pulverizing the deposit to obtain a pulverized product;
    wherein the content of element M is 7-10% in the raw material,
    wherein the raw material is heated to the first temperature at a temperature increase rate of 10°C/min or less;
    wherein the first temperature is 1100-1500°C; and
    wherein the second temperature is 800-1000°C.

11. The method according to claim 10, having one or more of the following features:

    (1) the raw material comprises elemental silicon, silicon dioxide, and an alkaline earth metal source;
    (2) when vapor deposition is performed, the first temperature is 1200-1400°C;
    (3) when vapor deposition is performed, the second temperature is 800-900°C; and
    (4) vapor deposition is performed with an absolute pressure of 40 Pa or less.

12. The method according to claim 10 or 11, further comprising a step of coating the silicon-based negative electrode active material, optionally, the coating treatment is a carbon material coating treatment, and more optionally, the carbon material coating treatment comprises operations of: placing the silicon-based negative electrode active material in a chamber containing a carbon source gas, heating to 700-1000°C, and maintaining the temperature for 1-6 h.

13. A secondary battery comprising an negative electrode comprising the silicon-based negative electrode active material according to any one of claims 1-9.

14. An electrical device comprising the secondary battery according to claim 13.

FIG. 1

FIG. 2

FIG. 3

FIG. 4

FIG. 5

FIG. 6

## INTERNATIONAL SEARCH REPORT

| International application No. |
| --- |
| **PCT/CN2023/079821** |

| A. | CLASSIFICATION OF SUBJECT MATTER |
| --- | --- |

H01M4/36(2006.01)i; H01M4/38(2006.01)i; H01M4/485(2010.01)i; H01M4/58(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 负极, 硅, 硅酸镁, MgSiO3, 半峰宽, FWHM, 碳, 包覆, 电池, negative, anode, silicon, magnesium, silicate, width, half, carbon, coat+, battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111433949 A (DAE JOO ELECTRONIC MATERIALS CO., LTD.) 17 July 2020 (2020-07-17) description, paragraphs 16-99, and figures 1-4 | 1-14 |
| A | CN 111466046 A (LG CHEMICAL LTD.) 28 July 2020 (2020-07-28) entire document | 1-14 |
| A | CN 113728465 A (LG ENERGY SOLUTION LTD.) 30 November 2021 (2021-11-30) entire document | 1-14 |
| A | US 2023049476 A1 (DAEJOO ELECTRONIC MATERIALS CO., LTD.) 16 February 2023 (2023-02-16) entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 August 2023** | **12 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/079821**

| Patent document cited in search report | | | Publication date (day/month/year) | Patent family member(s) | | | Publication date (day/month/year) |
|---|---|---|---|---|---|---|---|
| CN | 111433949 | A | 17 July 2020 | JP | 2021506059 | A | 18 February 2021 |
| | | | | US | 2020295352 | A1 | 17 September 2020 |
| | | | | KR | 20190066596 | A | 13 June 2019 |
| | | | | KR | 102236365 | B1 | 06 April 2021 |
| | | | | EP | 3723171 | A1 | 14 October 2020 |
| | | | | EP | 3723171 | A4 | 11 August 2021 |
| CN | 111466046 | A | 28 July 2020 | JP | 2020529709 | A | 08 October 2020 |
| | | | | JP | 7063981 | B2 | 09 May 2022 |
| | | | | EP | 3678230 | A1 | 08 July 2020 |
| | | | | EP | 3678230 | A4 | 23 December 2020 |
| | | | | US | 2023067691 | A1 | 02 March 2023 |
| | | | | US | 2021074995 | A1 | 11 March 2021 |
| | | | | WO | 2019151813 | A1 | 08 August 2019 |
| | | | | JP | 2022076482 | A | 19 May 2022 |
| | | | | KR | 20190093176 | A | 08 August 2019 |
| | | | | KR | 102301219 | B1 | 10 September 2021 |
| CN | 113728465 | A | 30 November 2021 | WO | 2020149724 | A1 | 23 July 2020 |
| | | | | US | 2022077467 | A1 | 10 March 2022 |
| | | | | EP | 3902035 | A1 | 27 October 2021 |
| | | | | EP | 3902035 | A4 | 16 March 2022 |
| | | | | JP | 2022516664 | A | 01 March 2022 |
| | | | | JP | 7239712 | B2 | 14 March 2023 |
| | | | | KR | 20200090058 | A | 28 July 2020 |
| US | 2023049476 | A1 | 16 February 2023 | KR | 20210094685 | A | 30 July 2021 |
| | | | | EP | 4095947 | A1 | 30 November 2022 |
| | | | | WO | 2021149996 | A1 | 29 July 2021 |
| | | | | JP | 2023511165 | A | 16 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 195872017 T

- GB 190772016 T